Europäisches Patentamt

European Patent Office

Office européen des brevets

(11) Publication number: **0 171 860**

**A1**

# EUROPEAN PATENT APPLICATION

(21) Application number: 85201300.2

(22) Date of filing: 13.08.85

(51) Int. Cl.4: **A 01 D 78/10**

(30) Priority: 14.08.84 NL 8402499
25.07.85 NL 8502125

(43) Date of publication of application:
19.02.86 Bulletin 86/8

(84) Designated Contracting States:
AT DE FR GB IT NL SE

(71) Applicant: C. van der Lely N.V.
Weverskade 10 P.O. Box 26
NL-3155 ZG Maasland(NL)

(72) Inventor: Van der Lely, Cornelis
7 Brüschenrain
Zug(CH)

(74) Representative: Mulder, Herman et al,
Octrooibureau Van der Lely N.V. Weverskade 10 P.O. Box
26
NL-3155 ZG Maasland(NL)

(54) Machine for displacing crop lying on the ground.

(57) The hay-making machine comprises at least one rake member (12) which is rotatable about an upwardly extending axis of rotation. The rake member is provided with a flexible wall (22). A plurality of plate-shaped tines (24) is fastened to the flexible wall. Serrated edges of the tines are extending outwardly. The plate-shaped tines are connected near the underside as well as to the upper side of the flexible wall. The hay-making machine comprises an upstanding wall arranged behind the rake members.

./...

FIG. 2

FIG. 3

# MACHINE FOR DISPLACING CROP LYING ON THE GROUND

The invention relates to a machine for the lateral displacement of crop lying on the ground, which machine comprises at least one mechanically driven rake member rotatable about an upwardly extending axis and provided with tines.

The object of the invention is to provide such a machine, by means of which not only the crop is effectively raked away and displaced, but in which also the rake tines can satisfactorily match the unevennesses of the ground, so that no excessive amount of soil is raked along with the crop.

According to the invention, at least a plurality of the tines is plate-shaped and is fastened to the outer side of a flexible wall of the rake member.

Depending the circumstances, with the construction according to the invention it is possible to obtain one or more of the following advantages, viz. a satisfactory displacement of the crop, a raking clean of the field, the absence or near-absence of soil from the crop, the possibility of also displacing short crop, the prevention of the tines from moving over the crop lying on the ground and, finally, the prevention of the crop from being cut off by the tines. Moreover, the plate-shaped tines can contribute to a considerable extent to the maintainance of the tension of the flexible wall during the rotation of the rake member.

According to an other aspect of the invention, the plate-shaped tines, comprising an upwardly directed part, also comprise a substantially horizontal part located near the ground, by means of which it is possible to attain an even better matching of the tines to the unevennesses of the ground.

According to a further aspect of the invention, the rake member comprises an upper rim spaced above the top side of the flexible wall. By the arrangement of said rim above the flexible wall it is attained that large quantities of crop can be better displaced because of the reduction of the pressure on the flexible wall.

According to a still further aspect of the invention, the lower edge of the flexible wall is coupled with the top side of the rake member via an approximately horizontally projecting connecting member extending near the lower edge of the wall.

Since during rotation the lower side of the flexible wall may tend to lag behind the top edge, as a result of which the wall may be torsioned and drawn slightly upwards, it may be desirable to exert a counterforce on the lower side of the wall in order to keep the edge as much as possible in its position. However, the connecting member has to be so constructed as to allow the lower edge still to have a certain freedom of movement upwardly, for which purpose the coupling of the connecting member with the wall is preferably effected by means of pivots.

According to yet a further aspect of the invention, the machine is provided with a plurality of rake members placed in a row and rotating in the same direction and with an upstanding wall, preferably extending over the total width of the machine and arranged behind the rake members, which wall is placed near to the opening between two neighbouring rake members to catch crop carried by at least one of the rake members through said opening.

For a better understanding of the invention and to show how the same may be carried into effect, reference will now be made, by way of example, to the accompanying drawings, in which:

Figure 1 is a plan view of the machine according to the invention,

Figure 2 is a side elevation of the machine shown in Figure 1 in the direction indicated by arrow II,

Figure 3 is a partial side elevation of the machine, to an enlarged scale, in the direction indicated by arrow II in Figure 1,

Figure 4 is a sectional view of the machine taken on the line IV - IV in Figure 3,

Figure 5 is a partial view, to the same scale as in Figure 4, of the inner side of a rake member of the machine in the direction indicated by arrow V in Figure 1,

Figure 6 is a plan view in the direction indicated by arrow VI in Figure 5,

Figure 7 is a plan view of a machine comprising three rake members,

Figure 8 is a plan view of a machine comprising four rake members,

Figure 9 is a plan view of an other embodiment of the machine according to the invention,

Figure 10 is a side view of the machine in the direction indicated by arrow X in Figure 9,

Figure 11 is a plan view of an other embodiment of the machine according to the invention,

Figure 12 is a side view of the machine in the direction indicated by arrow XII in Figure 11, and

Figure 13 is a sectional view of part of the machine taken on the line XIII - XIII in Figure 11.

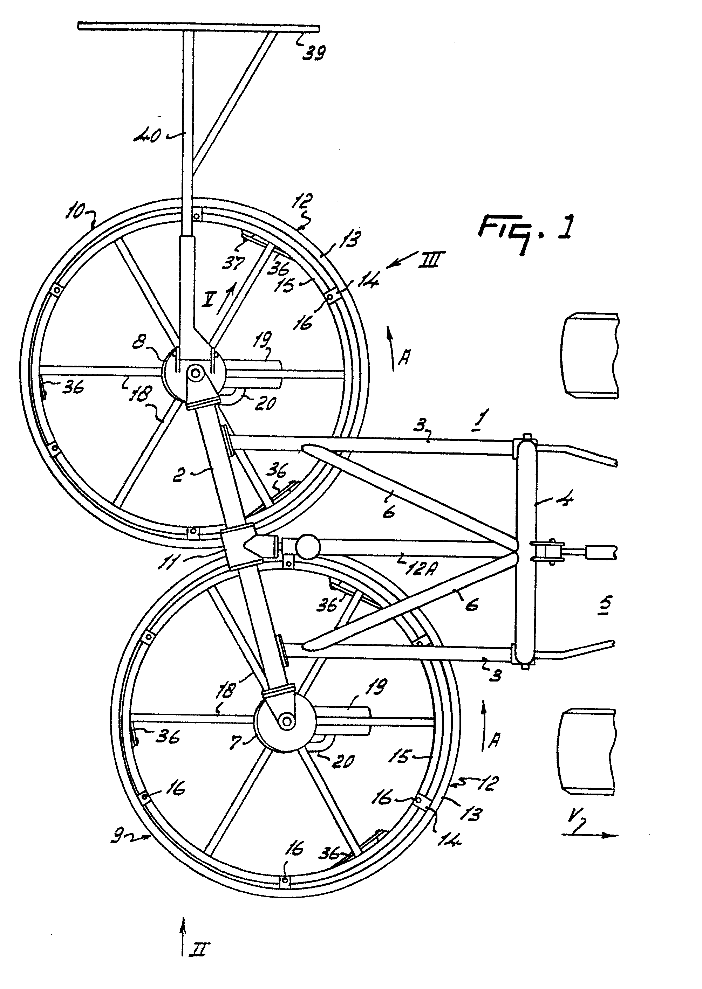

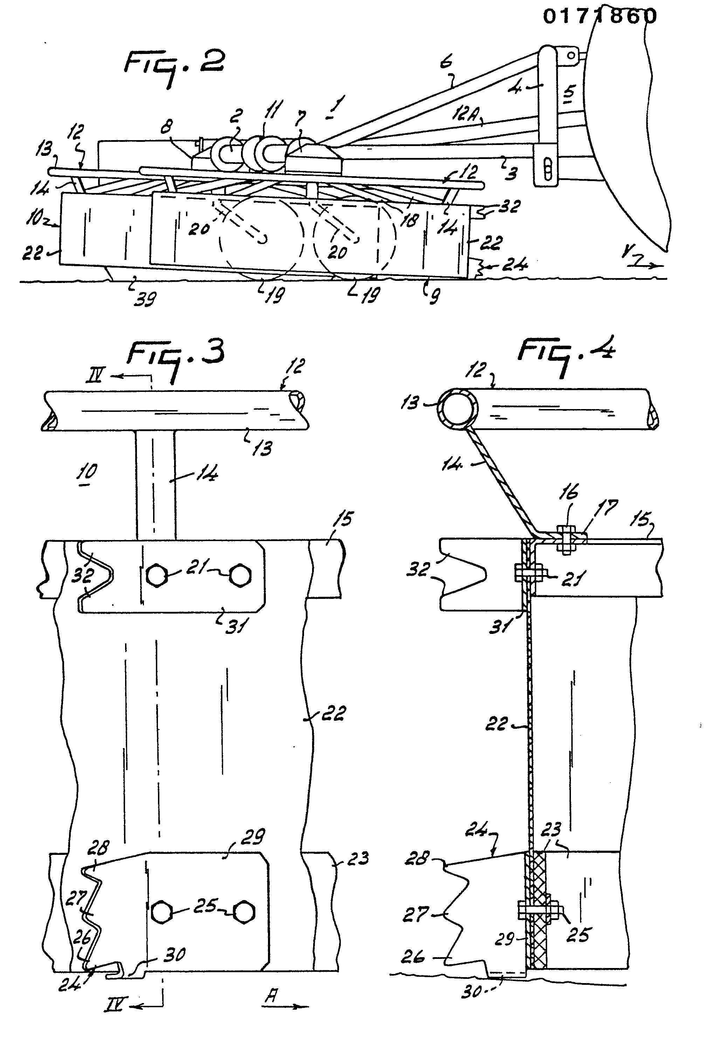

The machine shown in Figures 1 - 6 serves to laterally displace crop lying on the ground, in particular grass or hay.

In this embodiment, the machine is constructed as a side-delivery rake. It comprises a frame 1 having a hollow frame beam 2 arranged transverse to the intended direction of operative travel, which frame beam is connected by two frame beams 3 extending in the direction of travel with a trestle 4. This trestle is coupled in three connecting points in known manner with a three-point lifting device 5 of a tractor (shown only in part). The frame beams 3 are coupled by means of two frame beams 6 converging in forwardly inclined direction with the top end of the trestle 4.

The hollow frame beam 2 has at each end a gear box 7 and 8, respectively, in which shafts (not shown) are arranged slightly forwardly inclined for rake members 9 and 10, respectively. The angle of the shafts with the horizontal is smaller than 90°, e.g. about 70°.

Between its two ends, i.e. near the middle, the frame beam 2 has a gear box 11 which can be coupled by means of an intermediate shaft 12A with a power take-off shaft (not shown) of the tractor.

The hollow frame beam 2 holds in a well-known manner a driving shaft (not shown), such that the rake members 9 and 10, when viewed from above, can rotate in the same anti-clockwise direction indicated by the arrow A.

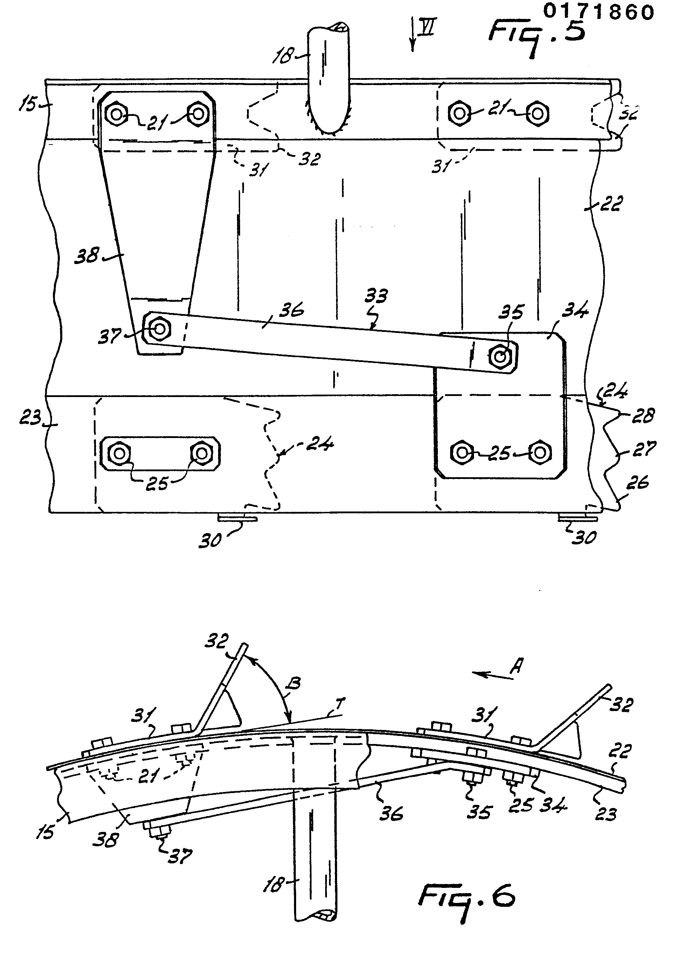

The rake members 9 and 10 are of identical construction and will de described in detail with reference to Figures 3 - 6. The frame 12 of the rake member comprises a circular tube 13 to which a circular ring 15 having an angular profile is connected by means of a plurality of supports 14 with the aid of bolt and nut joints 16. For this purpose the supports 14 have a substantially horizontally bent-over end 17 fastened to the top flange of the ring 15.

The downwardly directed edge of the ring 15 has .fastened to it a number of, e.g six, struts 18 (Figure 1) which are fastened to a hub of the rake member which is connected with the driving shaft in a known manner.

Each rake member 9 and 10, and hence the machine, is supported by a ground wheel 19 which is secured by means of an arm 20 to the frame beam 2. A flexible wall 22, which is substantially cylindrical, is fastened by a plurality of bolt and nut joints to the ring 15. The flexible wall may, for example, have an armouring of canvas, but it may also entirely consist of rubber.

The inner side of the lower edge of the flexible wall 22 has fastened to it a ring 23, also of flexible material, whereas the outer side is provided with plate--shaped tines 24 by means of bolt and nut joints 25. In

this embodiment, twelve plate-shaped tines are uniformly distributed along the circumference. The plate-shaped tines 24, which are preferably made of unflexible material, in this embodiment extend substantially vertically upwards along a descriptive line of the cylindrical wall 22, but, if desired, they may alternatively be at a not too large angle to the descriptive line of the wall, so as to be extending forwards or backwards. Preferably, said angle is less than 30°.

As is apparent from Figure 4, the lower boundaries of the plate-shaped tines 24, which can come into contact with the ground, extend substantially parallel to the ground. At their underside the tines have a point 26 which lies at some distance above the ground, preferably between 0.5 and 3 centimeters in the lowermost position of the tine. The plate-shaped tine is at an angle B of less than 90°, in this embodiment 60°, to a tangent at its fastening point to the flexible wall 22, in such a manner that the tine extends rearwardly in the direction of rotation A. If desired, however, said angle may be larger or smaller up to about 30°.

The tines describe a path which is at a small angle to the ground, because the shafts of the rake members are slightly inclined forwardly.

The length of the point 26 is about 2 to 3 centimeters, measured from its tip to the base of the triangular point, and the angle between the sides of the point 26 is about 45°, whilst the point is directed slightly towards the ground.

In this embodiment, the lowermost point 26 has furthermore arranged above it a plurality of points 27 and 28 located at a larger distance above the ground. In this embodiment, the upper point 28 thereof is sharpest and the middle one 27 is the largest, i.e. the angle of the tip of the points is smallest for point 27 and largest for point 28. In this embodiment, the point

- 7 -

0171860

27 is about 90° and the point 28 about 30°.

In this embodiment, during normal practice the entire plate-shaped tine 24 extends to about 1 centimeter above the ground in its lowermost position. In dependence on the nature of the crop to be displaced, it may be desirable to arrange the tine either higher or lower. Thus, for heavy crop it will be desired to arrange the tine in a higher position.

The outwardly extending length of the plate-shaped tine is about 7 centimeters. This length is dependent inter alia on the speed at which the machine is expected to be moved over the ground. In some countries the crop is relatively light and not very long, so that longer tines and a higher rotational speed and forward speed can be used so as to adapt the amount of crop to its weight.

Each of the tines has a fastening part 29 which is slightly bent and extends along the circumference of the flexible wall 22.

In this embodiment, the plate-shaped tine has a substantially horizontal extension 30 operating as a foot, which extension comes into contact with the ground and can serve as a support in the lowermost position of the tine. The extension can also be at a small distance from the ground and supports the wall only when the wall gets into a cavity.

When the amount of crop is very great, additional plate-shaped tines 31 can be fastened to the top side of the flexible wall. These plate-shaped tines 31 also have a pair of projecting points 32 for improving the displacement of the crop. These plate-shaped tines may be slightly shorter than those at the lower side of the flexible wall and may extend backwardly with respect to the direction of rotation. The angle $\beta$ between the plate-shaped tines 32 and the tangent T is preferably about 45°.

Since, in dependence on its thickness and weight, the flexible wall may sometimes tend to an uncontrolled deformation, joints 33 are provided at some places between the lower side of the wall and the fixed ring at the top side. These joints are such that deformation due to the weight of the crop, which would give rise to an undesirable position of the tines, is avoided as much as possible. These joints 33 comprise a support 34 fastened at the lower side of the flexible edge of the wall and being coupled by means of a pivot 35 with a substantially horizontal connecting member 36. This member or arm 36 is coupled through a pivot 37 with a downwardly extending arm 38 which, in turn, is connected with the upper ring 15. For this connection of the joints 33 it is preferred to use the bolt and nut joints of the plate-shaped tines.

In this manner the forces exerted in the tangential direction on the lower side of the wall are absorbed and, in particular, the lower side of the wall can be displaced upwardly in a controlled manner in case of uneven ground. This construction is advantageous in that it will not allow large amounts of crop to lift the wall too far from the ground. In particular, this is of importance if the rake member has to displace a larger amount of crop, namely when it has taken over the crop from an other rake member.

Since the amount of crop to be displaced may sometimes be very large, it is of importance to provide above the flexible wall the circular tube 13 of the frame of the rake member. This tube has a larger diameter than that of the flexible wall 22 and, viewed from above, it is preferably arranged near the ends of the upper tines, when provided. The height of the flexible wall is preferably equal to one sixth of the wall diameter and normally lies between 1/8th and 1/4th thereof. The two rake members 9 and 10 are so disposed that, during normal operation, the rake member 9 is located slightly closer to the tractor than the neighbouring rake member 10, so that the rake member 9 transfers the assembled crop to the next rake member which, in turn, delivers the crop in the form of a swath.

In order to define the boundary of the swath, there is arranged a swath board 39 at the outer side of the rake member. This swath board is fastened by means of an arm 40 to the frame 1 and can be tilted up during transport in such a manner that it comes to lie on top of the frame.

During normal operation, the crop is raked in a lateral direction by the rake members. The plate-shaped tines fastened to the flexible wall have the task to displace the crop laterally in such a manner that it is delivered in the form of a swath.

The plate-shaped tines, which may be made of either steel or a hard synthetic resin material and have a thickness of about 3 millimeters, are advantageous in that they can satisfactorily match the un-. evennesses of the ground owing to the movability of the flexible wall, whose deformation is preferably controlled by the joint 33. Moreover, they may be advantageous in that very little or no soil is raked along with the crop. Finally, the plate-shaped tines are advantageous when short crop has to be assembled, because in that case they displace the crop better than tines of spring steel wire.

During the operation of the machine, the rake wheel 9 rakes the crop laterally and transfers same to the rake member 10, which delivers it in the form of a swath.

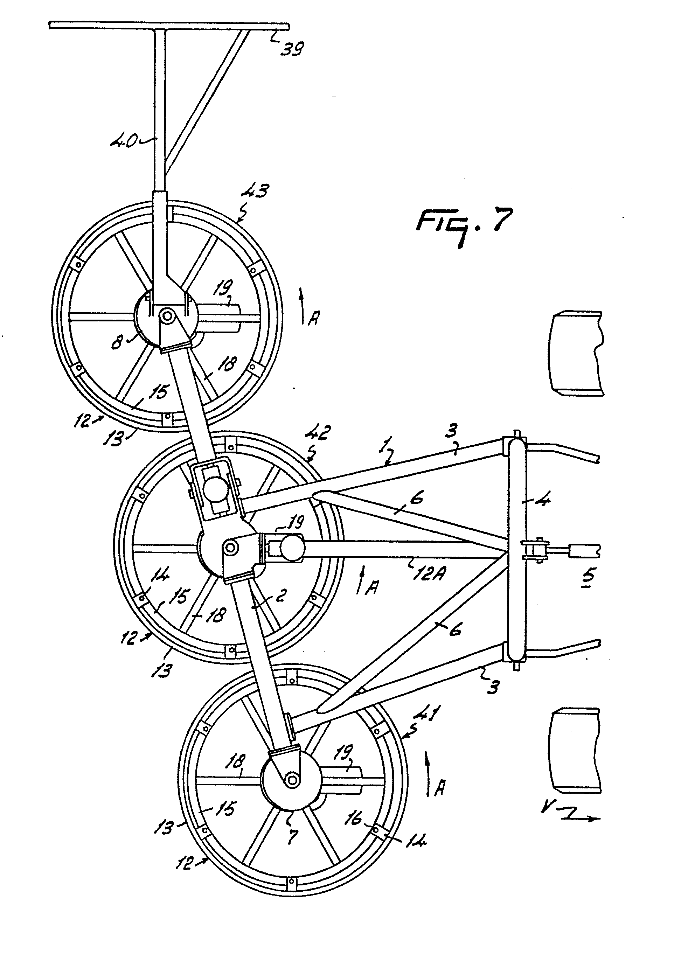

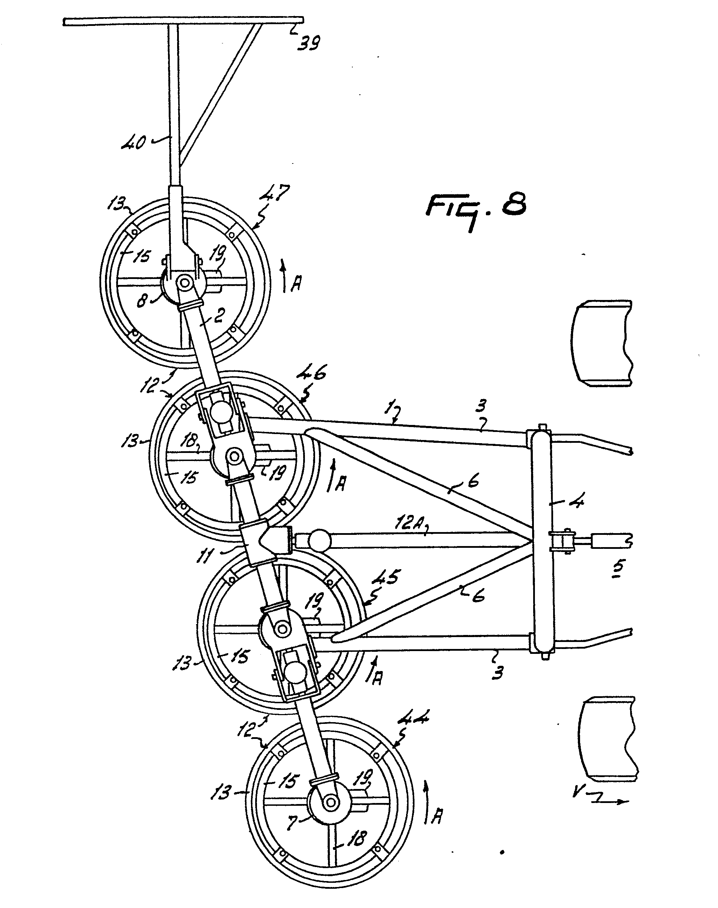

The embodiment discussed above comprises two rake members, but it is also possible to arrange three rake members 41, 42 and 43 in a row, as illustrated in Figure 7, so that the working width of the machine is larger. In this Figure 7, components corresponding with those in Figures 1 - 6 have been designated by corresponding reference numerals. It is even possible to arrange four rake members 44, 45, 46 and 47 in a row, as is illustrated in Figure 8.

The machines shown are side-delivery rakes. The rake members described above can also be employed in other devices for the lateral displacement of crop, e.g. in hay tedders in which the rake members do not rotate in the same direction but in opposite directions.

The construction of the rake members permits the production of relatively large rake members, e.g. having a diameter of more than 1.20 meters.

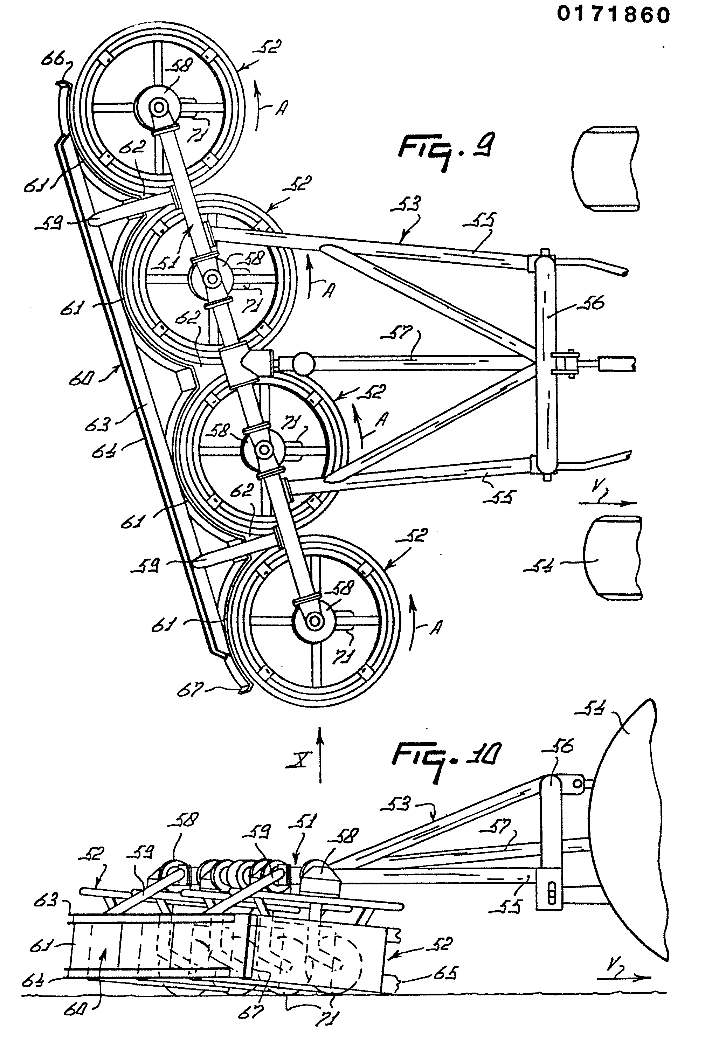

The machine shown in Figures 9 and 10 resembles to a large extent that of Figures 7 and 8. It serves as a side-delivery rake to laterally displace crop lying on the ground, such as grass or hay.

The machine comprises a frame beam 51 extending transverse to the intended direction of operative travel V. Underneath this frame beam are arranged in a known per se manner four rake members 52 which are rotatable about substantially vertical axes, which are tilted somewhat in forward direction. The frame beam 51 is connected to a frame part 53 which comprises connections to couple the machine to a three-point hitch of a tractor 54.

In the same way as described with respect to the preceding embodiments, the frame part 53 comprises a number of frame beams 55 which are fastened to an upstanding frame part or trestle 56 provided with the coupling means for the connection of the machine with the tractor. The rake members 52 are driven, as is described before for the other embodiments, via a power take-off shaft 57 and via gear transmissions in gear boxes 58, such that they rotate in the same counter-clockwise direction A, viewed from above.

The rake members in general may consist of any known rake member, but it is favourable to use the rake member described herebefore.

The frame beam 51 is provided with a number of rearwardly extending arms 59, which carry a wall 60. This wall 60 locally comprises segments 61 which are at least nearly parts of a circle and are arranged around the rake members 62, such that the segments protrude in a forward direction towards the opening 62 between two neighbouring rake members. Preferably, the segments extend into the opening 62 and between the rake members.

The wall 60 is provided at its uppermost and lowermost sides with strengthening members 63 and 64, respectively.

For a better receiving of the crop it is advantageous if the substantially vertical wall 60 extends over the operational height of the rake members 52, in particular such that the lowermost rim of the wall is closer to the ground than the lowermost path of the tines near the wall. The segments 61 of the wall are situated at a distance which is between 1 and 20 centimeters, but preferably between 2 and 8 centimeters, from the paths 65 of the rake members. In this embodiment this distance, which is measured according to a radial of a rake member extending perpendicular to the wall 60 is 4 centimeters.

It should be noted that this distance depends on the construction and type of the rake member used and on the condition of the crop. In this connection it is advantageous that the distance between the wall and the rake member may be adjusted, which can be done e.g. by constructing the arms 59 in such a way that their length is adjustable. It may also be advantageous to adjust the wall in an upward direction. This can be done by providing the wall with bolts which may slide in slots of downwardly extending parts of the arms 59. The wall extends, viewed from above, substantially parallel to the row of rake members, which is obliquely to the intended direction of travel V of the machine.

The wall 60 is provided at its left-hand and right-hand sides with extensions 66 and 67, respectively, which extend partly around the rake members.

In view of the fact that the row of rake members 52 extends obliquely with respect to the direction of intended travel V, the extension 67 of the wall 60 surrounds the right-hand rake member of the row over about 45° from the radial of the rake wheel extending into the direction V. The extension 66 extends substantially over a circumference so as to end on a radial of the left-hand rake member extending in the direction V.

During use the machine acts as a side delivery rake as follows :

The rake members 52 displace during their rotation the crop lying in front of the rake members to the left, in view of the fact that each rake member displaces the crop to a neighbouring rake member situated at its left-hand side, such that the crop which was lying in front of the row of rake members is deposited as a swath at the left-hand side of the machine, in a similar way as is the case in the previously discussed embodiments.

However, in view of the fact that the crop may comprise short and sometimes light haulms, it may happen that these short and/or light haulms will be carried along by the tines of the rake members through the openings 62 between each two neighbouring rake members and be deposited on the ground, so that they will be lost.

However, in this embodiment the wall 60 receives the crop which is carried through the openings 62. Due to the segments 61 of the wall 60 the crop will normally not be flung off the tines and very short haulms will be gathered against the sides of the segments, such that they will remain on the tines or projections of the rake member and carried around such that they are again deposited on the ground or on the crop lying in front of the machine.

Depending on the type of tines of the rake member, it may even happen that crop is again caught by the tines and is transported by the rake member to the front of the machine. If the crop is carried around in forward direction by one rake member, it may happen that a neighbouring right-hand rake member whose tines move in a backward direction through the same opening, is combing this crop off the tines of the left-hand rake member, but in this event the crop is again caught by the wall behind the right-hand rake member and finally carried around at the right-hand side of the machine.

With this wall 60 it is therefore possible that all the crop is gathered by the rake and the losses are minimized.

The extension 67 has as a task to keep the crop on the tines of the rake member so that it will be better carried around by the right-hand rake member and that the crop will not be deposited at the right-hand side of the machine.

It would, however, not be very disadvantageous if some crop was deposited on the right-hand side as it will be normally deposited on unraked land.

The extension 66 is advantageous for the forming of a swath at the left-hand side of the machine and helps to prevent crop from being carried around by the left-hand rake member.

For a proper functioning of the wall 60 it is advantageous if the height of the wall is the same or greater than the operative part of the rake members.

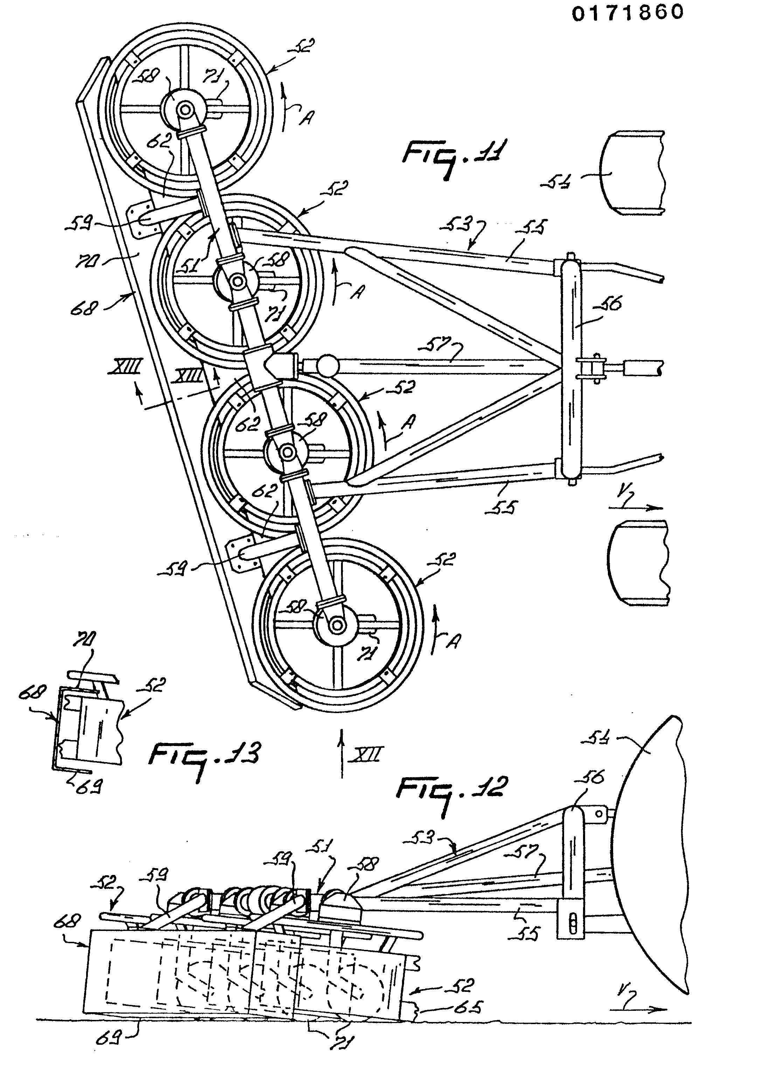

In Figures 11, 12 and 13 still another embodiment of the invention is shown, which embodiment resembles that according to Figures 9 and 10 and the same parts are indicated by the same reference numerals.

Also in this embodiment, preferably rake members having a flexible wall can be used, e.g. of the type described herebefore. Also in this embodiment, the rake members 52 rotate according to the arrow A and the crop is displaced from right to left in front of the rake members and is deposited in a swath at the left-hand side of the machine.

Also in this case, the row of rake members is at an angle of less than 90°, preferably 70°, to the intended direction of travel V, such that the right-hand rake member is slightly closer to the tractor 54 than the left-hand rake member.

At the rear of the rake members 52 a substantially straight wall 68 is mounted with the aid of arms 59. This wall extends substantially vertically and has a substantially horizontally extending part 69 which extends preferably underneath the path of the tines or projections of the rake members.

In order to fasten the wall 68 to the arms 59 and to strengthen this wall, it is provided with a part extending substantially horizontally in a forward direction (Figure 5).

The wall 68 is in this embodiment at a greater distance from the extreme path of the tines or projections of the rake members, which distance is 6 centimeters, but, if required, it may be less.

As is described with respect to Figures 9 and 10, also in this embodiment if crop is displaced through the opening 62 between the rake members, it is caught by the wall 68. However, if the rake members 52 are not provided with long protruding tines or prongs, but instead with a wall having projections such as metal or plastics plates or ribs, the crop will be less

- 15 -

0171860

easily carried around by the rake members as is the case in the embodiment according to Figures 9 and 10. As, however, such kind of projection displaces relatively much air, that part of the crop which is not displaced in a forward direction through the openings 62 will be displaced by the airflow along the wall, whereby it may rest on the horizontally extending part 69, until it leaves the machine at the right-and side and is deposited on the unraked ground.

In the embodiments described above, the machines are supported on ground wheels 71 (see Figures 10 and 12) but the invention can also be used on a machine which is solely supported by the three-point linkage of a tractor.

The features of the invention are not limited to the text of the specification, but also relate to all details illustrated in the Figures.

- 16 -

0171860

CLAIMS

1.  A machine for the lateral displacement of crop lying on the ground, which machine comprises at least one mechanically driven rake member rotatable about an upwardly extending axis and provided with tines, characterized in that a plurality of the tines (24) is plate-shaped and is fastened to the outer side of a flexible wall (22) of the rake member.

2.  A machine as claimed in claim 1, characterized in that the plate-shaped tines are arranged at or near the underside of the flexible wall and preferably extend in a direction of height, preferably at least substantially along a descriptive line of the cylindrical wall.

3.  A machine as claimed in any one of the preceding claims, characterized in that the flexible wall has a reinforcing rim (23) at the underside, and that preferably the tines are secured to the reinforcing rim (23) of the flexible wall (22) preferably made of canvas.

4.  A machine preferably as claimed in any one of the preceding claims, characterized in that the plate-shaped tines comprise an upwardly directed part and an at least substantially horizontal part (30) located on or near the groud.

5.  A machine as claimed in any one of the preceding claims, characterized in that the plate-shaped tines have a plurality of points (26, 27, 28) lying one above the other.

6.  A machine as claimed in any one of the preceding claims, characterized in that at the top side of the flexible wall there is arranged a second group of plate-shaped tines (31).

7.  A machine preferably as claimed in any one of the preceding claims, characterized in that the rake member has an upper rim (13) located at a distance above the top side of the flexible wall, said upper rim (13) of the rake member having preferably a larger diameter than the flexible wall (22) and its diameter being preferably about equal to the diameter on which the outermost points of the tines are located.

8. A machine preferably as claimed in any one of the preceding claims, characterized in that the lower edge of the flexible wall is coupled with the top side of the rake member via a substantially horizontal connecting member extending near the lower edge of the wall, said connecting member (36) extending at least mainly in the direction of rotation of the rake member.

9. A device as claimed in claim 8, characterized in that the connecting member (36) is connected by means of pivot joints (35, 37) with both the upper rim of the rake member and the lower rim of the flexible wall, and a downwardly directed arm is rigidly connected preferably with the top rim of the rake member, so as to be pivotable with the connecting member.

10. A machine as claimed in any one of the preceding claims 8 - 9, characterized in that the connection of the connecting member with the flexible wall is established by means of the fixation means of the tines to the wall.

11. A machine in particular as claimed in any one of the preceding claims and provided with a plurality of rake members placed in a row and rotating in the same direction, characterized in that the machine is provided with an upstanding wall, preferably extending over the total width of the machine and arranged behind the rake members, which wall is placed near to the opening between two neighbouring rake members to catch crop carried by eat least one of the rake members through said opening.

12. A machine as claimed in claim 11, characterized in that the wall comprises at least one part extending at least partly around part of a rake member.

13. A machine as claimed in claims 11 or 12, characterized in that the wall is provided at its lowermost edge with a part extending in a forward direction underneath the rake members.

14. A machine as claimed in any one of the preceding claims 11 - 13, characterized in that the wall is situated at a distance between 1 and 20 centimeters, preferably at a distance between 2 and 10 centimeters, from the outermost boundary of the path described by the rake member during rotation.

0171860

FIG. 1

2/7

0171860

Fig. 2

Fig. 3

Fig. 4

Fig.5

0171860

Fig.6

FIG. 7

0171860

FIG. 8

0171860

FIG. 9

FIG. 10

FIG. 11

FIG. 13

FIG. 12

## DOCUMENTS CONSIDERED TO BE RELEVANT

EP 85201300.2

| Category | Citation of document with indication, where appropriate, of relevant passages | Relevant to claim | CLASSIFICATION OF THE APPLICATION (Int Cl 4) |
|---|---|---|---|
| X | AT - B - 372 574 (C. VAN DER LELY N.V.)<br><br>* Page 4, lines 29-32; claims 1,2,3,42; fig. 10,41 *<br><br>-- | 1,2,3,<br>4,7,8 | A 01 D 78/10 |
| A | AT - B - 358 309 (C. VAN DER LELY N.V.)<br><br>* Claims 1,2,3,4 *<br><br>-- | 1,3 | |
| A | CH - A - 590 602 (C. VAN DER LELY N.V.)<br><br>* Totality *<br><br>---- | 1 | |

| TECHNICAL FIELDS SEARCHED (Int. Cl 4) |
|---|
| A 01 D 78/00 |
| A 01 D 80/00 |
| A 01 D 84/00 |

The present search report has been drawn up for all claims

| Place of search | Date of completion of the search | Examiner |
|---|---|---|
| VIENNA | 08-11-1985 | MENTLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82